# EUROPEAN PATENT APPLICATION

(11) **EP 3 499 997 A1**
(43) Date of publication of application: **19.06.2019**
(21) Application number: 16912723.0
(22) Date of filing: 10.08.2016
(51) Int. Cl.: H04W 72/04, H04W 28/06

(54) **BASE STATION AND COMMUNICATION CONTROL METHOD**

(71) Applicant: Fujitsu Limited, Kawasaki-shi, Kanagawa 211-8588 (JP)
(72) Inventor: SHIMOMURA, Tsuyoshi, Kawasaki-shi Kanagawa 211-8588 (JP); WU, Jianming, Kawasaki-shi Kanagawa 211-8588 (JP); TANAKA, Yoshinori, Kawasaki-shi Kanagawa 211-8588 (JP)
(74) Representative: Haseltine Lake Kempner LLP
(86) International application number: PCT/JP2016/073676
(87) International publication number: WO 2018/029843

(57) **Abstract**

A base station to be used in a communication system in which an uplink and a downlink are time-multiplexed, includes: a controller configured to set a first time period and a second time period in a single frequency block among multiple frequency blocks included in the uplink or the downlink and set symbol lengths or cyclic prefixes for the set first and second time periods so that the symbol lengths or cyclic prefixes set for the first time period are different from the symbol lengths or cyclic prefixes set for the second time period; and a transmitter configured to transmit setting information of the set symbol lengths or the set cyclic prefixes to the user equipment.

## Description

### FIELD

The present invention relates to a base station, a user equipment, and a communication control method.

### BACKGROUND

Recently, 5th generation (5G) mobile communication systems have been studied. For the 5G mobile communication systems, it has been considered that multiple types of communication in which symbol lengths are different are frequency-multiplexed based on orthogonal frequency division multiplexing (OFDM). In OFDM, the symbol lengths are reciprocals of subcarrier spacing. Thus, as the symbol lengths are larger, the subcarrier spacing is smaller.

### SUMMARY

### TECHNICAL PROBLEM

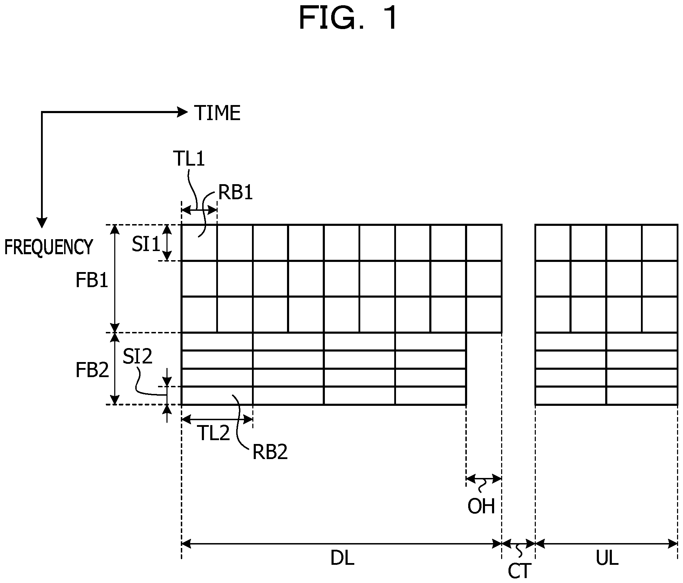

FIG. 1 is a diagram describing the problem. A communication scheme illustrated in FIG. 1 is a time division duplex (TDD) scheme in which an uplink UL and a downlink DL are time-multiplexed. Multiple frequency blocks, for example, frequency blocks FB1 and FB2 are included in the uplink UL or the downlink DL. The frequency block FB1 is composed of multiple resource blocks RB1. The frequency block FB2 is composed of multiple resource blocks RB2. Communication resources are defined by time and frequencies. For example, each of the resource blocks RB1 is defined by a total length TL1 of a symbol length and a cyclic prefix (CP) length and subcarrier spacing SI1. Each of the resource blocks RB2 is defined by a total length TL2 of a symbol length and a CP length and subcarrier spacing SI2. CP is also referred to as guard interval. Hereinafter, a "total length of a symbol length and a CP length" is also referred to as "total length".

In an example illustrated in FIG. 1, the total lengths TL1 of the frequency block FB1 are shorter than the total lengths TL2 of the frequency block FB2. When the CP lengths are fixed regardless of the symbol lengths or are determined to be in proportion to the symbol lengths, the subcarrier spacing SI1 of the frequency blocks FB1 is larger than the subcarrier spacing SI2 of the frequency blocks FB2. In the TDD scheme used in a 5G mobile communication system, a switching time period CT based on a cell's radius occurs upon switching from the downlink DL to the uplink UL, and it is requested that the timing of the switching in the frequency block FB1 match the timing of the switching in the frequency block FB2. Thus, in the frequency block FB2 composed of the resource blocks RB2 of which the total lengths TL2 are longer than the total lengths TL1 of the resource blocks RB1, the resource blocks RB2 are muted, and the muting increases overhead OH in a time-axis direction and reduces the efficiency of using communication resources.

In the study by the 3rd Generation Partnership Project (3GPP), parameters such as symbol lengths, CP lengths, and subcarrier spacing are referred to as "numerologies" in some cases.

Techniques disclosed herein have been made under the aforementioned circumstances and aim to improve the efficiency of using communication resources.

### SOLUTION TO PROBLEM

According to an aspect of the embodiment, a base station to be used in a communication system in which an uplink and a downlink are time-multiplexed includes: a controller configured to set a first time period and a second time period in a single frequency block among multiple frequency blocks included in the uplink or the downlink and set symbol lengths or cyclic prefixes for the set first and second time periods so that the symbol lengths or cyclic prefixes set for the first time period are different from the symbol lengths or cyclic prefixes set for the second time period; and a transmitter configured to transmit setting information of the set symbol lengths or the set cyclic prefixes to the user equipment.

### ADVANTAGEOUS EFFECTS OF INVENTION

According to the present disclosure, the efficiency of using communication resources may be improved.

### BRIEF DESCRIPTION OF DRAWINGS

FIG. 1 is a diagram describing a problem.
FIG. 2 is a diagram illustrating an example of a configuration of a communication system according to a first embodiment.
FIG. 3 is a diagram describing an example of operations of the communication system according to the first embodiment.
FIG. 4 is a diagram describing an example of operations of the communication system according to the first embodiment.
FIG. 5 is a diagram describing an example of operations of the communication system according to the first embodiment.
FIG. 6 is a diagram describing an example of operations of the communication system according to the first embodiment.
FIG. 7 is a diagram illustrating an example of setting information according to the first embodiment.
FIG. 8 is a functional block diagram illustrating an example of a configuration of a base station according to the first embodiment.
FIG. 9 is a functional block diagram illustrating an example of a configuration of a user equipment according to the first embodiment.
FIG. 10 is a diagram illustrating an example of a hardware configuration of the base station.
FIG. 11 is a diagram illustrating an example of a hardware configuration of the user equipment.

### DESCRIPTION OF EMBODIMENTS

Hereinafter, embodiments of a base station disclosed herein and a communication control method disclosed herein are described. The base station disclosed herein and the communication control method disclosed herein are not limited by the embodiments. In addition, in the embodiments, configurations having the same function are indicated by the same reference symbol.

### [First Embodiment]

### <Configuration of Communication System>

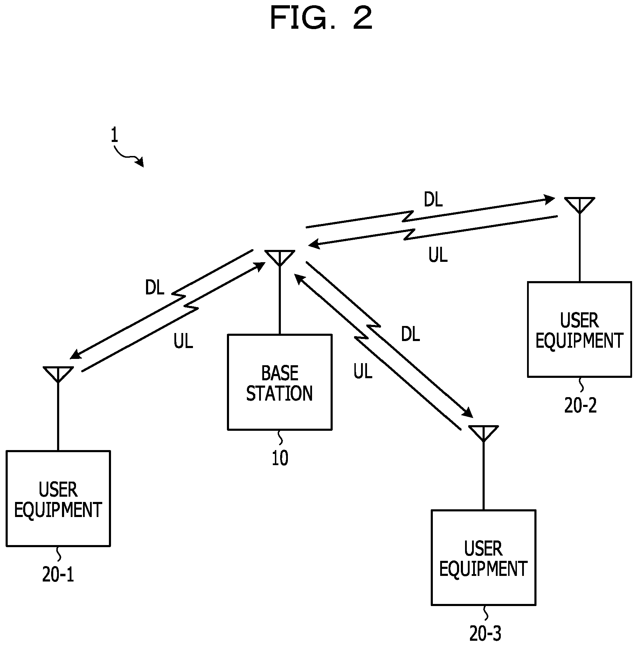

FIG. 2 is a diagram illustrating an example of a configuration of a communication system according to a first embodiment. In FIG. 2, a communication system 1 includes a base station 10 and user equipments (UEs) 20-1 to 20-3. The base station 10 communicates with the user equipments 20-1 to 20-3 using an uplink UL and a downlink DL set between the base station 10 and the user equipments 20-1 to 20-3 in accordance with a TDD scheme. In FIG. 2, the three user equipments are used as an example. The number of user equipments, however, is not limited to the number of equipments illustrated in FIG. 2. When the user equipments 20-1 to 20-3 are not distinguished from each other, the user equipments 20-1 to 20-3 are hereinafter referred to as user equipments 20 in some cases.

### <Operations of Communication System>

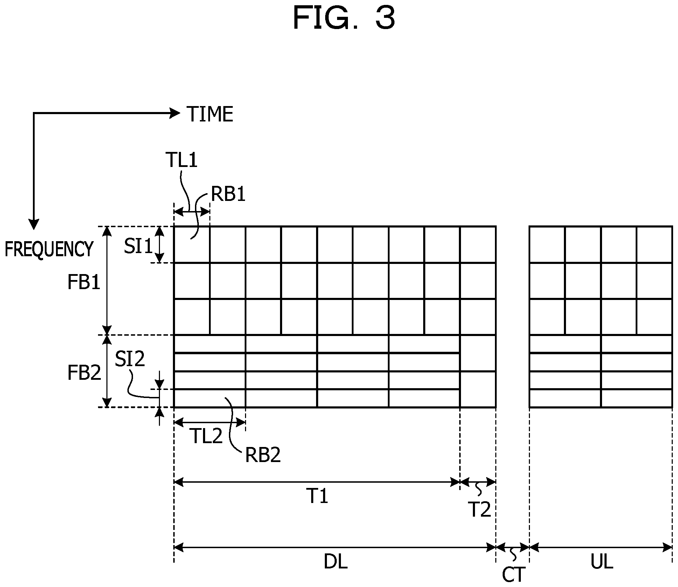

FIGs. 3 to 6 are diagrams describing examples of operations of the communication system according to the first embodiment. The operations are described in operational examples 1 to 4. A communication scheme illustrated in FIGs. 3 to 6 is the TDD scheme in which the uplink UL and the downlink DL are time-multiplexed. In addition, multiple frequency blocks, for example, frequency blocks FB1 and FB2 are included in the uplink UL or the downlink DL. For example, the frequency block FB1 and the frequency block FB2 are a series of continuous frequency bands or are formed by dividing the series of continuous frequency bands. In addition, in FIGs. 3 to 6, each of communication resources is defined by time and a frequency. For example, each of resource blocks RB1 is defined by a total length TL1 and subcarrier spacing SI1, and each of resource blocks RB2 is defined by a total length TL2 and subcarrier spacing SI2.

### <Operational Example 1: FIG. 3>

The operational example 1 describes the case where each of the total lengths TL2 of the resource blocks RB2 is an integral multiple of each of the total lengths TL1 of the resource blocks RB1. For example, in FIG. 3, the total lengths TL2 are twice as long as the total lengths TL1.

The base station 10 sets a first time period T1 and a second time period T2 in the frequency block FB2 among the frequency blocks FB1 and FB2 included in the downlink DL while treating, as a reference, the frequency block FB2 in which such overhead OH as illustrated in FIG. 1 may occur. The first time period T1 is set to an integral multiple of the total length TL1 or TL2, while the second time period T2 is set to an integral multiple of the total length TL1 or TL2. In an example illustrated in FIG. 3, the first time period T1 is set to be 4 times as long as the total length TL2, and the second time period T2 is set to be equal to the total length TL1. In addition, the first time period T1 and the second time period T2 are set based on a time period for the downlink DL, a time period CT for switching from the downlink DL to the uplink UL, the total length TL1, and the total length TL2 so that overhead OH in a time-axis direction is minimized.

Then, the base station 10 allocates the resource blocks RB2 to the first time period T1 of the frequency block FB2 and allocates the resource blocks RB1 to the second time period T2 of the frequency block FB2. Since each of the total lengths TL2 is an integral multiple of each of the total lengths TL1, overhead OH is zero.

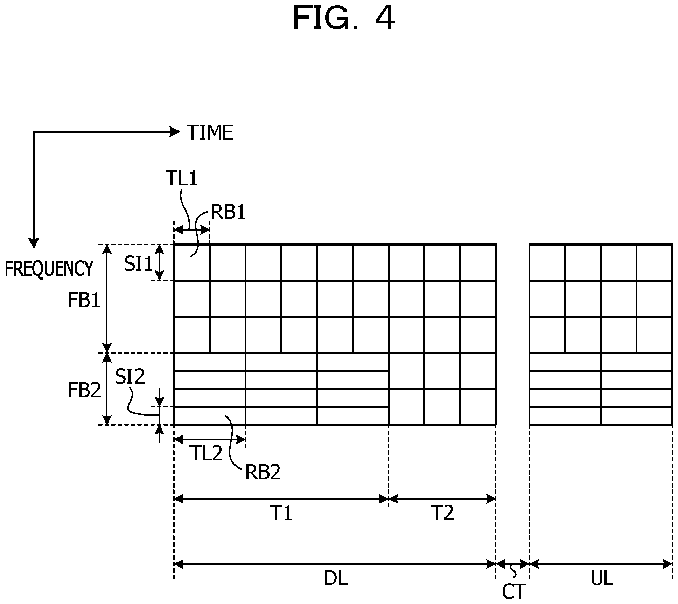

### <Operational Example 2: FIG. 4>

The operational example 2 describes the case where each of the total lengths TL2 of the resource blocks RB2 is an integral multiple of each of the total lengths TL1 of the resource blocks RB1, like the operational example 1. For example, in FIG. 4, the total lengths TL2 are twice as long as the total lengths TL1, like FIG. 3.

The base station 10 sets the first time period T1 and the second time period T2 in the resource block RB2 among the frequency blocks RB1 and FB2 included in the downlink DL, like the operational example 1. In an example illustrated in FIG. 4, the first time period T1 is set to be 3 times as long as the total length TL2, and the second time period T2 is set to be 3 times as long as the total length TL1.

Then, the base station 10 allocates the resource blocks RB2 to the first time period T1 of the frequency block FB2 and allocates the resource blocks RB1 to the second time period T2 of the frequency block FB2. In the example illustrated in FIG. 4, since each of the total lengths TL2 is an integral multiple of each of the total lengths TL1, overhead OH is zero, like FIG. 3.

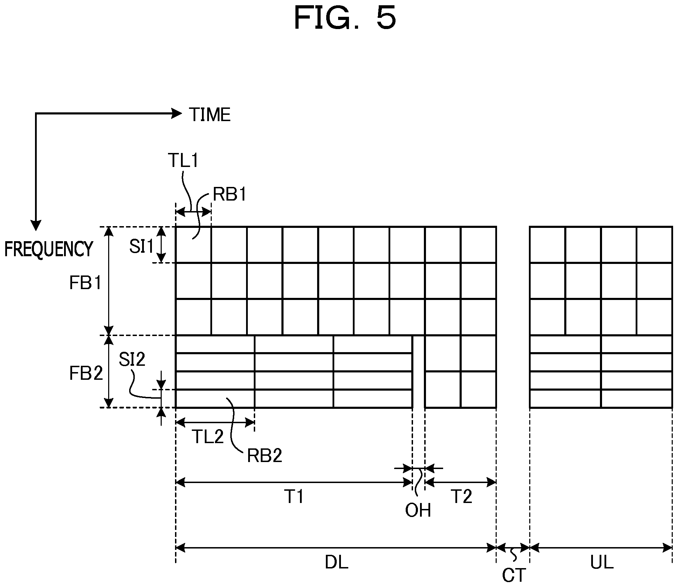

### <Operational Example 3: FIG. 5>

The operational example 3 describes the case where each of the total lengths TL2 of the resource blocks RB2 is not an integral multiple of each of the total lengths TL1 of the resource blocks RB1.

The base station 10 sets the first time period T1 and the second time period T2 in the frequency block FB2 among the frequency blocks FB1 and FB2 included in the downlink DL, like the operational example 1. In an example illustrated in FIG. 5, the first time period T1 is set to be 3 times as long as the total length TL2, and the second time period T2 is set to be 2 times as long as the total length TL1. Then, the base station 10 allocates the resource blocks RB2 to the first time period T1 of the frequency block FB2 and allocates the resource blocks RB1 to the second time period T2 of the frequency block FB2. In the example illustrated in FIG. 5, overhead OH is shorter than that described in the example illustrated in FIG. 1.

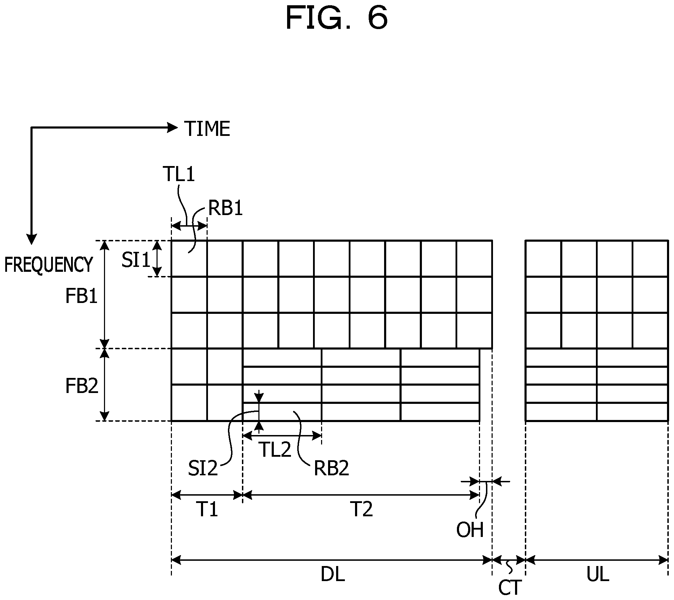

### <Operational Example 4: FIG. 6>

The operational example 4 describes the case where each of the total lengths TL2 of the resource blocks RB2 is not an integral multiple of each of the total lengths TL1 of the resource blocks RB1.

The base station 10 sets the first time period T1 and the second time period T2 in the frequency block FB2 among the frequency blocks FB1 and FB2 included in the downlink DL, like the operational example 1. In an example illustrated in FIG. 6, the first time period T1 is set to be twice as long as the total length TL1, and the second time period T2 is set to be 3 times as long as the total length T2. Then, the base station 10 allocates the resource blocks RB1 to the first time period T1 of the frequency block FB2 and allocates the resource blocks RB2 to the second time period T2 of the frequency block FB2. In the example illustrated in FIG. 6, overhead OH is shorter than that described in the example illustrated in FIG. 1.

The operational examples 1 to 4 are described above. In each of the operational examples 1 to 4, since each of the total lengths TL 1 and TL2 is a total length of a symbol length and a CP length, either or both of symbol lengths and CP lengths in the resource blocks RB1 are different from either or both of symbol lengths and CP lengths in the resource blocks RB2. In addition, in the operational examples 1 to 4, when the resource blocks RB2 are allocated to the first time period T1 of the frequency block FB2, the resource blocks RB1 are allocated to the second time period T2 (in the operational examples 1 to 3), and when the resource blocks RB1 are allocated to the first time period T1, the resource blocks RB2 are allocated to the second time period T2 (in the operational example 4). In each of the operational examples 1 to 4, the base station 10 sets symbol lengths or CP lengths for the first and second time periods T1 and T2 of the frequency block FB2 so that the symbol lengths or CP lengths set for the first time period T1 are different from the symbol lengths or CP lengths set for the second time period T2.

A symbol length (or a symbol length included in a total length) that does not include a CP length is also referred to as "effective symbol length" in some cases.

### <Generation of Setting Information>

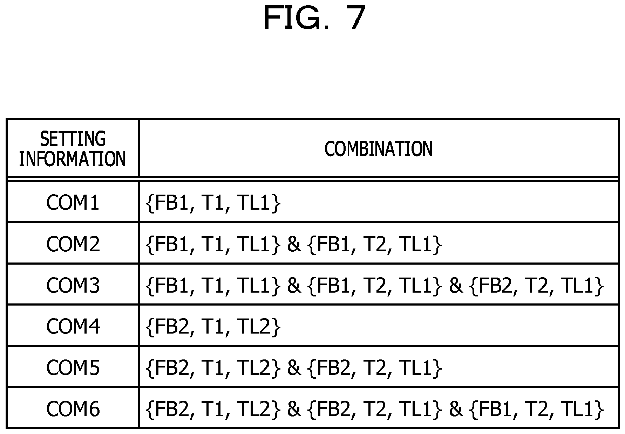

FIG. 7 is a diagram illustrating an example of setting information according to the first embodiment. Setting information COM1 to COM6 indicates combinations of frequency blocks to which communication resources are allocated, time periods during which the communication resources are allocated, and numerologies. In addition, the setting information COM1 to COM6 indicates, for a single user equipment 20, combinations of communication resources allocatable simultaneously in allocation executed once and numerologies. The numerologies included in the setting information COM1 to COM6 are, for example, symbol lengths, CP lengths, subcarrier spacing, or total lengths. The following describes, as an example, the case where the total lengths are specified as the numerologies. In addition, the following describes, as an example, the generation of the setting information in the case (FIG. 3) where the resource blocks RB2 are allocated to the first time period T1 of the frequency block FB2 and the resource blocks RB1 are allocated to the second time period T2 of the frequency block FB2, as described in the operational example 1.

When the base station 10 allocates the resource blocks as illustrated in FIG. 3, the base station 10 generates any of the setting information COM1 to COM6 illustrated in FIG. 7 for each of the user equipments 20.

The setting information COM1 indicates that resource blocks RB1 each having the total length TL1 in the first time period T1 of the frequency block FB1 are allocatable to a certain single user equipment 20 in allocation executed once.

The setting information COM2 indicates that resource blocks RB1 each having the total length TL1 in the first time period T1 of the frequency block FB1 and resource blocks RB1 each having the total length TL1 in the second time period T2 of the frequency block FB1 are simultaneously allocatable to a certain single user equipment 20 in allocation executed once.

The setting information COM3 indicates that resource blocks RB1 each having the total length TL1 in the first time period T1 of the frequency block FB1, resource blocks RB1 each having the total length TL1 in the second time period T2 of the frequency block FB1, and resource blocks RB1 each having the total length TL1 in the second time period TL2 of the frequency block FB2 are simultaneously allocatable to a certain single user equipment 20 in allocation executed once.

The setting information COM4 indicates that resource blocks RB2 each having the total length TL2 in the first time period T1 of the frequency block FB2 are allocatable to a certain single user equipment 20 in allocation executed once.

The setting information COM5 indicates that resource blocks RB2 each having the total length TL2 in the first time period T1 of the frequency block FB2 and resource blocks RB1 each having the total length TL1 in the second time period of the frequency block FB2 are simultaneously allocatable to a certain single user equipment 20 in allocation executed once.

The setting information COM6 indicates that resource blocks RB2 each having the total length TL2 in the first time period T1 of the frequency block FB2, resource blocks RB1 each having the total length TL1 in the second time period T2 of the frequency block FB2, and resource blocks RB1 each having the total length TL1 in the second time period T2 of the frequency FB1 are simultaneously allocatable to a certain single user equipment 20 in allocation executed once.

Thus, the base station 10 generates the setting information COM1 to COM6 in order to notify the user equipments 20 of the numerologies set by the base station 10. Then, the base station 10 transmits the generated setting information COM1 to COM6 to the user equipments 20.

In addition, when the base station 10 generates the setting information COM2, COM3, COM5, and COM6 among the setting information COM1 to COM6, the base station 10 simultaneously allocates communication resources for the first time period T1 and communication resources for the second time period T2 to a certain single user equipment 20.

In addition, the base station 10 transmits allocation numbers (m, n) of communication resources to the user equipments 20 in accordance with results of allocating the communication resources (resource blocks). m indicates an initial number in a frequency direction of the allocated communication resources, and n indicates a last number in the frequency direction of the allocated communication resources. The user equipments 20 determine the communication resources, allocated to the user equipments 20, of the downlink DL in accordance with the setting information COM1 to COM6 and the allocation numbers (m, n).

For example, the user equipment 20-1 to which the setting information COM1 has been transmitted from the base station 10 determines that m-th to m+n-th resource blocks RB1 for the first time period T1 of the frequency block FB1 have been allocated to the user equipment 20-1.

In addition, for example, the user equipment 20-1 to which the setting information COM3 has been transmitted from the base station 10 determines that the m-th to m+n-th resource blocks RB1 for the first time period T1 of the frequency block FB1 have been allocated to the user equipment 20-1, m-th to m+n-th resource blocks RB1 for the second time period T2 of the frequency block FB1 have been allocated to the user equipment 20-1, and f(m)-th to f(m+n)-th resource blocks RB1 for the second time period T2 of the frequency block FB2 have been allocated to the user equipment 20-1. In this case, "f(m) = m + K", where "K" is an integer value set for each of the combinations or for the setting information COM1 to COM6 in advance and is known for the base station 10 and the user equipments 20.

In addition, for example, the user equipment 20-1 to which the setting information COM5 has been transmitted from the base station 10 determines that m-th to m+n-th resource blocks RB2 for the first time period T1 of the frequency block FB2 have been allocated to the user equipment 20-1 and m-th to m+n-th resource blocks RB1 for the second time period T2 of the frequency block FB2 have been allocated to the user equipment 20-1.

### <Configuration of Base Station>

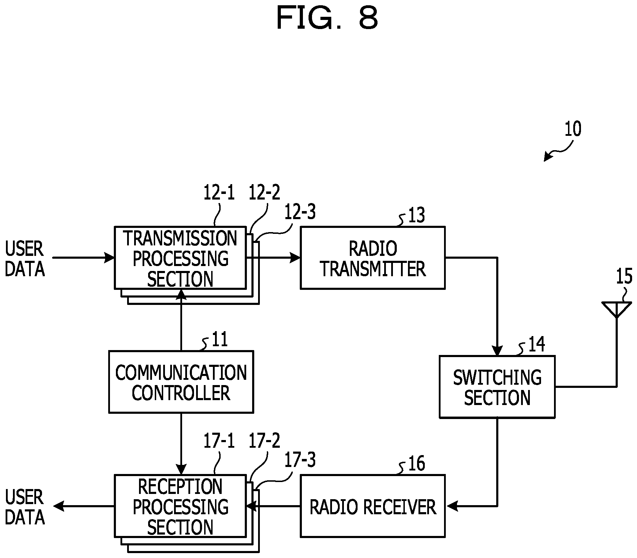

FIG. 8 is a functional block diagram illustrating an example of a configuration of the base station according to the first embodiment. In FIG. 8, the base station 10 includes a communication controller 11, transmission processing sections 12-1 to 12-3, a radio transmitter 13, a switching section 14, an antenna 15, a radio receiver 16, and reception processing sections 17-1 to 17-3. The transmission processing sections 12-1 to 12-3 and the reception processing sections 17-1 to 17-3 correspond to the user equipments 20-1 to 20-3. When the transmission processing sections 12-1 to 12-3 are not distinguished from each other, the transmission processing sections 12-1 to 12-3 are hereinafter referred to as transmission processing sections 12 in some cases. When the reception processing sections 17-1 to 17-3 are not distinguished from each other, the reception processing sections 17-1 to 17-3 are hereinafter referred to as reception processing sections 17 in some cases.

The communication controller 11 executes allocation (hereinafter referred to as "uplink allocation" in some cases) of communication resources of the uplink UL to the user equipments 20 and allocation (hereinafter referred to as "downlink allocation" in some cases) of communication resources of the downlink DL to the user equipments 20 and outputs results of the uplink allocation to the transmission processing sections 12 and the reception processing sections 17.

In addition, the communication controller 11 operates as described above in the operational examples 1 to 4, sets the first time period T1 and the second time period T2 in the frequency block FB2 while treating, as a reference, the frequency block FB2 in which such overhead OH as illustrated in FIG. 1 may occur, and sets symbol lengths or CP lengths for the set first time period T1 and the set second time period T2 so that the symbol lengths or CP lengths set for the first time period T1 are different from the symbol lengths or CP lengths set for the second time period T2.

In the case where the communication controller 11 sets symbol lengths or CP lengths for the first time period T1 and the second time period T2 so that the symbol lengths or CP lengths set for the first time period T1 are different from the symbol lengths or CP lengths set for the second time period T2, it is preferable that the communication controller 11 cause the timing of multiple symbols of which total lengths are the same in the frequency block FB1 to match the timing of multiple symbols of which total lengths are the same in the frequency block FB2, as illustrated in FIGs. 3 to 6. In this case, either or both of the first and second time periods T1 and T2 set in the frequency block FB2 is or are also applied to the frequency block FB1. For example, in FIGs. 3 to 5, during the second time period T2, the timing of symbols each having the total length TL1 in the frequency block FB1 matches the timing of symbols each having the total length TL1 in the frequency block FB2. In addition, for example, in FIG. 6, during the first time period T1, the timing of symbols each having the total length TL1 in the frequency block FB1 matches the timing of symbols each having the total length TL1 in the frequency block FB2. In addition, for example, in FIGs. 3 and 4, the first and second time periods T1 and T2 set in the frequency block FB2 are also applied to the frequency block FB1. In addition, for example, in FIG. 5, the second time period T2 set in the frequency block FB2 is also applied to the frequency block FB1. In addition, for example, in FIG. 6, the first time period T1 set in the frequency block FB2 is also applied to the frequency block FB1.

As described above, by causing the timing of symbols in the frequency FB1 and the timing of symbols in the frequency block FB2 to match each other, it may be possible to reduce a load of a demodulation process in a user equipment 20 to which communication resources of the frequency block FB1 and communication resources of the frequency block FB2 have been simultaneously allocated.

In addition, the communication controller 11 generates any of the setting information COM1 to COM6 illustrated in FIG. 7 and outputs the generated setting information to the transmission processing sections 12.

In addition, the communication controller 11 determines allocation numbers (m, n) of communication resources in accordance with results of the downlink allocation and outputs the determined allocation numbers (m, n) to the transmission processing sections 12.

In the case where the communication controller 11 generates the setting information COM2, COM3, COM5, and COM6 among the setting information COM1 to COM6, the communication controller 11 simultaneously allocates communication resources for the first time period T1 and communication resources for the second time period T2 to a certain single user equipment 20 in the downlink allocation. When the setting information COM3 and COM6 among the setting information COM1 to COM6 is generated, a frequency bandwidth of communication resources allocated by the communication controller 11 to the single user equipment 20 for the second time period T2 is larger than a frequency bandwidth of communication resources allocated by the communication controller 11 to the single user equipment 20 for the first time period T1. Thus, since communication resources for the first time period T1 and communication resources for the second time period T2 are simultaneously allocated to the certain single user equipment 20, the communication resources may be efficiently allocated to the user equipment 20 that may transmit a large amount of user data in the downlink DL. In addition, since the frequency bandwidth of the communication resources allocated for the second time period T2 is larger than the frequency bandwidth of the communication resources allocated for the first time period T1, the communication resources may be further efficiently allocated to the user equipment 20 that may transmit a large amount of user data in the downlink DL.

The transmission processing sections 12 encode and modulate user data, results of the uplink allocation, the setting information COM1 to COM6, and allocation numbers (m, n), execute inverse fast Fourier transform (IFFT) on signals after the modulation to generate symbols, and adds CPs to the generated symbols. In this case, the transmission processing sections 12 map the signals after the modulation to communication resources of the downlink DL in accordance with the allocation numbers (m, n). The transmission processing sections 12 output the symbols having the CPs added thereto to the radio transmitter 13.

The radio transmitter 13 executes radio transmission processes such as digital-to-analog conversion and up-conversion on the symbols received from the transmission processing sections 12 to generate downlink signals and transmits the generated downlink signals to the user equipments 20 via the switching section 14 and the antenna 15.

Downlink signals including the user data are transmitted to the user equipments 20 using, for example, the physical downlink shared channel (PDSCH). Downlink signals including any of the setting information COM1 to COM6 are transmitted to the user equipments 20 using, for example, the broadcast channel (BCH) or the physical downlink control channel (PDCCH). Downlink signals including the results of the uplink allocation or the allocation numbers (m, n) are transmitted to the user equipment 20 using, for example, the PDCCH.

The switching section 14 switches between the downlink and the uplink in accordance with divided time or switches between transmission by the base station 10 and reception by the base station 10 in accordance with the divided time. When the downlink DL is switched to the uplink UL, a switching time period CT based on a cell's radius occurs. The switching section 14 connects the radio transmitter 13 to the antenna 15 upon communication in the downlink DL and connects the radio receiver 16 to the antenna 15 upon communication in the uplink UL.

The radio receiver 16 receives uplink signals from the user equipments 20 via the antenna 15 and the switching section 14, executes radio reception processes such as down-conversion and analog-to-digital conversion on the received uplink signals, and outputs the uplink signals after the radio reception processes to the reception processing sections 17. The uplink signals received by the radio receiver 16 includes user data transmitted by the user equipments 20.

The reception processing sections 17 demodulate and decode the uplink signals received from the radio receiver 16 in accordance with results of the uplink allocation to obtain the user data.

### <Configuration of User Equipment>

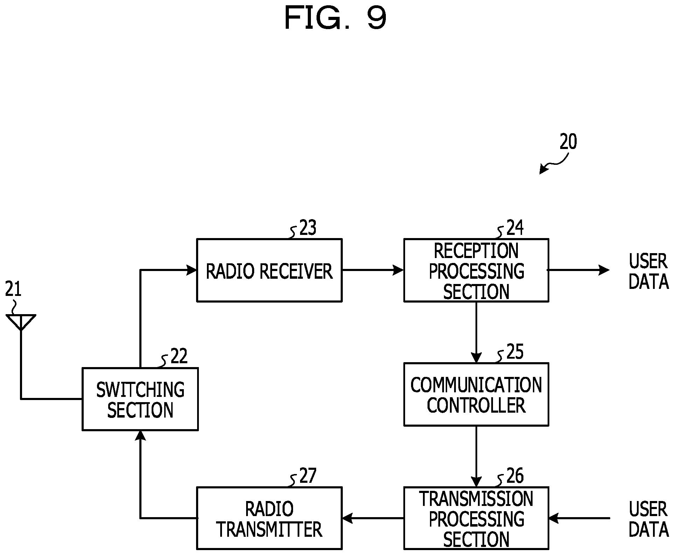

FIG. 9 is a functional block diagram illustrating an example of a configuration of a user equipment according to the first embodiment. In FIG. 9, the user equipment 20 includes an antenna 21, a switching section 22, a radio receiver 23, a reception processing section 24, a communication controller 25, a transmission processing section 26, and a radio transmitter 27.

The radio receiver 23 receives a downlink signal from the base station 10 via the antenna 21 and the switching section 22, executes radio reception processes such as down-conversion and analog-to-digital conversion on the received downlink signal, and outputs symbols after the radio reception processes to the reception processing section 24. The downlink signal received by the radio receiver 23 includes user data transmitted by the base station 10, the setting information COM1 to COM6, results of the uplink allocation, or allocation numbers (m, n). In addition, the symbols output by the radio receiver 23 have CPs added thereto.

The switching section 22 switches between the downlink DL and the uplink UL in accordance with divided time or switches between reception by the user equipment 20 and transmission by the user equipment 20 in accordance with the divided time. When the downlink DL is switched to the uplink UL, a switching time period CT based on the cell's radius occurs. The switching section 22 connects the radio receiver 23 to the antenna 21 upon communication in the downlink DL and connects the radio transmitter 27 to the antenna 21 upon communication in the uplink UL.

The reception processing section 24 removes the CPs from the symbols received from the radio receiver 23, executes Fast Fourier Transform (FFT) on the symbols after the removal, and demodulates and decodes a signal after the FFT to obtain the setting information COM1 to COM6, the results of the uplink allocation, or the allocation numbers (m, n). The reception processing section 24 outputs the results of the uplink allocation to the communication controller 25. In addition, the reception processing section 24 demodulates and decodes the signal after the FFT in accordance with the setting information COM1 to COM6 and the allocation numbers (m, n) to obtain the user data. For example, the reception processing section 24 demodulates the downlink signal in accordance with the setting information COM1 to COM6.

The communication controller 25 outputs the results of the uplink allocation to the transmission processing section 26.

The transmission processing section 26 encodes and modulates the user data, maps a signal after the modulation to communication resources of the uplink signal in accordance with the results of the uplink allocation, and outputs the signal after the mapping to the radio transmitter 27.

The radio transmitter 27 executes radio transmission processes such as digital-to-analog conversion and up-conversion on the signal received from the transmission processing section 26 to generate an uplink signal and transmits the generated uplink signal to the base station 10 via the switching section 22 and the antenna 21.

As described above, in the first embodiment, the base station 10 is used in the communication system 1 of the TDD scheme. The base station 10 includes the communication controller 11 and the radio transmitter 13. The communication controller 11 sets the first time period T1 and the second time period T2 in the frequency block FB2 among the frequency blocks FB1 and FB2 included in the downlink DL. In addition, the communication controller 11 sets symbol lengths or CP lengths for the set first time period T1 and the set second time period T2 so that the symbol lengths or CP lengths set for the first time period T1 are different from the symbol lengths or CP lengths set for the second time period T2. The radio transmitter 13 transmits the setting information COM1 to COM6 of the symbol lengths set by the communication controller 11 or the CP lengths set by the communication controller 11 to the user equipments 20.

In addition, in the first embodiment, the user equipments 20 are used in the communication system 1 of the TDD scheme. Each of the user equipments 20 includes the radio receiver 23 and the reception processing section 24. The radio receiver 23 receives the setting information COM1 to COM6 of the symbols or CP lengths that are different for the first and second time periods T1 and T2 set in the frequency block FB2 among the frequency blocks FB1 and FB2 included in the downlink DL. The setting information COM1 to COM6 is transmitted by the base station 10. The reception processing section 24 demodulates a downlink signal in accordance with the setting information COM1 to COM6.

Since overhead OH in the time-axis direction in the frequency block FB2 is reduced by executing the aforementioned operations, the efficiency of using communication resources may be improved.

### [Other Embodiments]

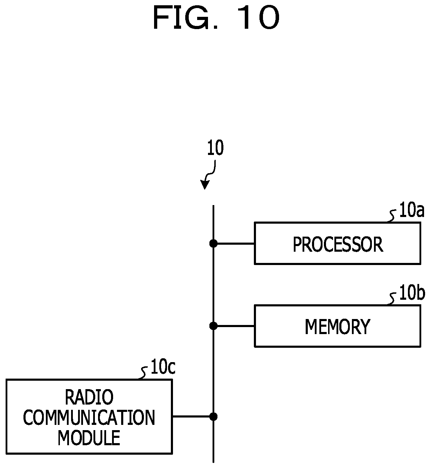

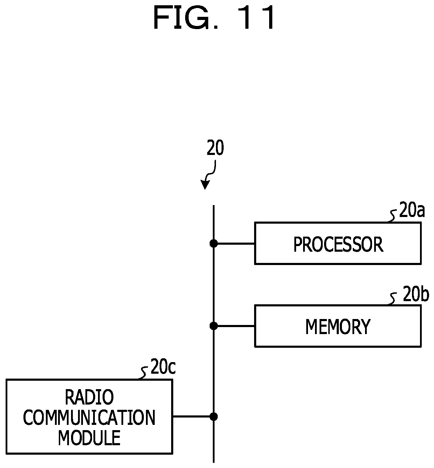

[1] The base station 10 may be enabled by the following hardware configuration. FIG. 10 is a diagram illustrating an example of the hardware configuration of the base station 10. As illustrated in FIG. 10, the base station 10 includes a processor 10a, a memory 10b, and a radio communication module 10c as hardware constituent elements. Examples of the processor 10a are a central processing unit (CPU), a digital signal processor (DSP), and a field programmable gate array (FPGA). In addition, the base station 10 may include a large scale integrated circuit (LSI) including the processor 10a and a peripheral circuit. Examples of the memory 10b are a RAM such as an SDRAM, a ROM, and a flash memory.
   The communication controller 11, the transmission processing sections 12, and the reception processing sections 17 are enabled by the processor 10a. The radio transmitter 13, the switching section 14, the antenna 15, and the radio receiver 16 are enabled by the radio communication module 10c.
[2] Each of the user equipments 20 may be enabled by the following hardware configuration. FIG. 11 is a diagram illustrating an example of the hardware configuration of the user equipment 20. As illustrated in FIG. 11, the user equipment 20 includes a processor 20a, a memory 20b, and a radio communication module 20c as hardware constituent elements. Examples of the processor 20a are a CPU, a DSP, and an FPGA. In addition, the user equipment 20 may include an LSI including the processor 20a and a peripheral circuit. Examples of the memory 20 are a RAM such as an SDRAM, a ROM, and a flash memory.
   The communication controller 25, the transmission processing section 26, and the reception processing section 24 are enabled by the processor 20a. The radio transmitter 27, the switching section 22, the antenna 21, and the radio receiver 23 are enabled by the radio communication module 20c.
[3] The first embodiment describes the case where the frequency block FB1 and the frequency block FB2 are the series of continuous frequency bands. A guard carrier, however, may exist between the frequency block FB1 and the frequency block FB2 in order to suppress interference between the frequency block FB1 and the frequency block FB2.
[4] The first embodiment describes the two frequency blocks FB1 and FB2 as an example. However, even when the number of frequency blocks is 3 or more, the techniques disclosed herein may be enabled in the same manner as the first embodiment.
[5] The first embodiment describes the case where the techniques disclosed herein are enabled using the downlink DL as an example. The techniques disclosed herein, however, may be enabled using the uplink UL in the same manner as the first embodiment.

### Reference Signs List

- 1: Communication system
- 10: Base station
- 20-1 to 20-3,: User equipment
- 11, 25: Communication controller
- 12-1 to 12-3, 26: Transmission processing section
- 13, 27: Radio transmitter
- 14, 22: Switching section
- 15, 21: Antenna
- 16, 23: Radio receiver
- 17-1 to 17-3, 24: Reception processing section

### Citation List

[Nonpatent Literature 1] "Numerology and TTI multiplexing for NR Forward Compatibility Analysis", 3GPP TSG-RAN WG1 #85, Rl-164692, 7.1.4, Qualcomm Incorporated, 23rd-27th May 2016

## Claims

1. A base station to be used in a communication system in which an uplink and a downlink are time-multiplexed, comprising:
a controller configured to set a first time period and a second time period in a single frequency block among multiple frequency blocks included in the uplink or the downlink and set symbol lengths or cyclic prefixes for the set first and second time periods so that the symbol lengths or cyclic prefixes set for the first time period are different from the symbol lengths or cyclic prefixes set for the second time period; and
a transmitter configured to transmit setting information of the set symbol lengths or the set cyclic prefixes to the user equipment.

2. The base station according to claim 1,
wherein the controller is configured to cause the timing of multiple symbols of which total lengths of symbol lengths and cyclic prefixes are the same in each of the multiple frequency blocks to match the timing of multiple symbols of which total lengths of symbol lengths and cyclic prefixes are the same in the other multiple frequency blocks.

3. The base station according to claim 1,
wherein the controller is configured to simultaneously allocate communication resources for the first time period and communication resources for the second time period to a single user equipment.

4. The base station according to claim 3,
wherein a frequency bandwidth of the communication resources allocated by the controller to the single user equipment for the second time period is larger than a frequency bandwidth of the communication resources allocated by the controller to the single user equipment for the first time period.

5. A user equipment to be used in a communication system in which an uplink and a downlink are time-multiplexed, comprising:
a receiver configured to receive setting information transmitted by a base station and indicating symbol lengths or cyclic prefixes that correspond to first and second time periods set in a single frequency block among multiple frequency blocks included in the uplink or the downlink so that the symbol lengths or cyclic prefixes corresponding to the first time period are different from the symbol lengths or cyclic prefixes corresponding to the second time period; and
a reception processing section configured to demodulate a downlink signal in accordance with the setting information.

6. A communication control method in a communication system in which an uplink and a downlink are time-multiplexed, comprising:
causing a base station to set a first time period and a second time period in a single frequency block among multiple frequency blocks included in the uplink or the downlink and set symbol lengths or cyclic prefixes for the first and second time periods so that the symbol lengths or cyclic prefixes set for the first time period are different from the symbol lengths or cyclic prefixes set for the second time period; and
causing the base station to transmit setting information of the symbol lengths set by the base station or the cyclic prefixes set by the base station to the user equipment.
